# EUROPEAN PATENT SPECIFICATION

(11) **EP 4 409 341 B1**
(45) Date of publication and mention of the grant of the patent: **14.10.2026**
(21) Application number: 21819071.8
(22) Date of filing: 18.11.2021
(51) Int. Cl.: G02B 6/122, G02B 6/136, G02B 6/12, G02F 1/01, G02F 1/065, G02F 1/225

(54) **PLASMONIC DEVICE AND METHOD FOR MANUFACTURING THE SAME**
PLASMONISCHE VORRICHTUNG UND VERFAHREN ZUR HERSTELLUNG DAVON
DISPOSITIF PLASMONIQUE ET SON PROCÉDÉ DE FABRICATION

(43) Date of publication of application: 07.08.2024
(60) Divisional application: 26196865.5
(73) Proprietor: Polariton Technologies AG, 8134 Adliswil (CH)
(72) Inventor: HÖSSBACHER, Claudia, 8038 Zürich (CH); DE LEO, Eva, 8004 Zürich (CH); HENI, Wolfgang, 8006 Zürich (CH)
(74) Representative: E. Blum & Co. AG
(86) International application number: PCT/EP2021/082213
(87) International publication number: WO 2023/088561

(56) References cited:
- US-A1- 2016 139 335
- US-A1- 2018 081 204
- BIAN YUSHENG ET AL: "3D silicon photonic interconnects and integrated circuits based on phase matching", 2021 IEEE 71ST ELECTRONIC COMPONENTS AND TECHNOLOGY CONFERENCE (ECTC), IEEE, 1 June 2021 (2021-06-01), pages 2279 - 2284, XP033956600, DOI: 10.1109/ECTC32696.2021.00357

## Description

### Technical Field

The invention relates to a method for manufacturing a plasmonic device.

### Background Art

Plasmonic devices are devices having plasmonic waveguides. Such devices allow to confine guided light to a small volume of space while still having comparatively low losses. This strong confinement tends to enhance nonlinear interactions between the light and the solid of the plasmonic waveguide.

Devices of this type are e.g. used for electro-optic light modulators or devices converting optical signals into electric signals, such as e.g. described in WO 2021/063548 and WO 2021/175590.

Such devices are typically manufactured by using micro-structuring techniques, e.g. as used for semiconductor manufacturing.

BIAN Y. ET AL: "3D silicon photonic interconnects and integrated circuits based on phase matching", 2021 IEEE 71st Electronic Components and Technology Conference (ECTC), 1 June 2021, DOI 10.1109/ECTC32696.2021.00357, describes silicon photonic components having a silicon waveguide in the FEOL part of the chip and a plasmonic BEOL slot waveguide.

US 2016/0139335A1 describes a photonic chip having an FEOL section with a waveguide and a BEOL section. The device further comprises an active optical device that may be in the plasmonic domain.

### Disclosure of the Invention

The problem to be solved by the present invention is to provide a method of the type above that allow to manufacture such devices economically. This problem is solved by the method of the independent claim.

Hence, according to one aspect, the invention relates to a method for manufacturing a plasmonic device comprising at least the following steps:
a) Manufacturing an FEOL structure comprising a (i.e. at least one) waveguide-forming layer. In this manufacturing step, the waveguide-forming layer is structured to form a dielectric waveguide adapted to guide light. In addition, the waveguide-forming layer may advantageously be structured to form at least part of at least one further semiconductor element as described below. The waveguide-forming layer is a dielectric layer. Advantageously, it is a semiconductor layer, in particular a monocrystalline semiconductor layer, and the dielectric waveguide is a semiconductor waveguide.
b) Manufacturing at least part of a BEOL structure on top of the FEOL structure by depositing and structuring several horizontal metal layers and several horizontal dielectric layers on the FEOL structure. The metal layers may e.g. be used to electrically contact elements in the FEOL structure.
c) After step b), removing, in a target area, the BEOL structure to a distance of no more than 1 µm (or even zero) of the dielectric waveguide. Removing the BEOL structure all the way to, or almost all the way to, the dielectric waveguide allows adding elements to the bottom of the target area that can optically couple to the dielectric waveguide.
d) After step c), forming, in the target area, a plasmonic waveguide coupled to the dielectric waveguide, with the plasmonic waveguide having a first structure with a permittivity having a negative real part (advantageously, the first structure is a conducting structure) and a second structure with a permittivity having a positive real part (advantageously, the second structure is a dielectric structure). In other words, the plasmonic waveguide is located and structured such that guided light can be transferred between the dielectric waveguide and the plasmonic waveguide.

Accordingly, the BEOL structure is manufactured before it is removed again in the target area (over all or over most of its thickness). This is in contrast to prior art techniques where the devices are assembled from the bottom to the top, i.e. the various layers are deposited and structured above each other, one by one.

This deviation from the normal processing order is advantageous in that it allows to employ standard semiconductor manufacturing steps, which include first building the FEOL structure and then the BEOL structure, with both including a select number of materials only. By manufacturing the plasmonic waveguide only *after* building the FEOL and BEOL structure and removing the BEOL structure in the target area, it becomes possible to use materials that are not used in standard FEOL and BEOL steps while still being able to directly couple the plasmonic waveguide to the dielectric waveguide.

For definitions of "horizontal", "vertical", "top", and "bottom", see below.

Advantageously, the first structure comprises a structure of silver and/or gold and/or copper, i.e. a structure comprising metallic silver and/or gold and/or copper, in particular a structure of metallic gold and/or silver, more preferably gold. These materials form highly efficient plasmonic waveguides while not being used in standard FEOL and BEOL processes, in particular not at the interface region between the BEOL and FEOL structures. In other words, advantageously, the BEOL structure and/or the FEOL structure does/do not comprise metallic silver and/or gold.

Advantageously, the BEOL structure is designed such that, when it is complete, i.e. after step b), and before it is removed in the target area, i.e. prior to step c), the metal layers of the BEOL structure cover no more than 20% of the target area. In this context, "cover no more than 20%" is understood such that, in a projection of the BEOL structure along the vertical direction, i.e. perpendicular to the substrate of the device, the metal parts cover no more that 20% of the target area. This allows to easily remove the BEOL structure in the target area. A small amount of the structured metal layers may, however, extend into the target area as long as sufficient etching remains possible.

Generally, the plasmonic waveguide can be any plasmonic waveguide using surface plasmons at an interface between the first structure and the second structure.

In an advantageous embodiment, however, the first structure of the plasmonic waveguide forms two bodies, in particular metal bodies, with a slot (i.e. a gap) between them, with at least part of the second structure being arranged in the slot. Hence, the plasmonic waveguide is slot-type plasmonic waveguide.

The bodies may e.g. be used to apply and/or detect a voltage over the slot.

In this case, advantageously, the structured metal layers of the BEOL structure do not cover the slot. Again, the term "cover" is used in the sense that, in a projection of the BEOL structure along the vertical direction, i.e. perpendicular to the substrate of the device, the structured metal layers do not overlap with the slot.

The first structure of the plasmonic waveguide may be contacted to at least one structured conducting layer of the BEOL structure. This allows using the BEOL structure to electrically contact the first structure.

Alternatively or in addition thereto, the method may comprise the step of forming, after step c), at least one metal lead that extends from the first structure of the plasmonic waveguide and over an edge of the target area to the top side of the BEOL structure. This provides an alternative or additional means for electrically contacting the first structure of the plasmonic waveguide.

At least part of the metal layers of the BEOL structure are arranged at a level higher than the plasmonic waveguide. In other words, at least part of the metal layers of the BEOL structure are located at a larger distance from the FEOL structure than the plasmonic waveguide. This design again is based on the idea that the BEOL structure is manufactured before the plasmonic waveguide, whereupon the BEOL structure is removed in the target area over all its thickness or nearly all its thickness, if required, such that the plasmonic waveguide can be directly coupled to the dielectric waveguide. This results in the plasmonic waveguide being located lower than at least part of the metal layers of the BEOL structure.

For direct optical coupling between the dielectric waveguide and the plasmonic waveguide, the smallest distance between the plasmonic waveguide and the dielectric waveguide is advantageously less than 1 µm. (Note that it may also be zero.)

Advantageously, the second structure exhibits an electro-optic effect. In a particularly important embodiment, it exhibits a linear electro-optic (i.e. the so-called "Pockels effect") where the change in refractive index is linearly proportional to the applied electric field. This is a strong effect that can be readily exploited in electro-optic modulators.

Alternatively or in addition, though, the second structure may exhibit other effects that might be exploited in the context of a plasmonic waveguide, such as, e.g., electro-absorption (electrically induced change of absorption), photore-fraction (light-induced change of refractive index), nonlinear optical effects (in particular second-order and/or third-order nonlinear optical effects, e.g. frequency doubling or frequency mixing of light waves, frequency up- and down-conversion, parametric amplification, sum- or difference-frequency generation, electro-optic effects (not only Pockels effects but also higher-order effects, such as Kerr effects), rectification), free-carrier or plasma-dispersion effects, optical amplification or emission, photo-detection, etc.

As mentioned, the waveguide-forming layer of the FEOL structure may be structured (in context of the method and/or of the device) to form at least one further semiconductor element, such as a semiconductor light source, a semiconductor light detector, a photonic phase shifter (e.g. thermo-optic or plasma-dispersion), electronic driving circuitry, and/or electronic processing circuitry.

### Brief Description of the Drawings

The invention will be better understood and objects other than those set forth above will become apparent when consideration is given to the following detailed description thereof. Such description makes reference to the annexed drawings, wherein:
Fig. 1 shows a top view of a first embodiment of a plasmonic device,
Fig. 2 is a sectional view along line **II-II** of Fig. 1,
Fig. 3 is a sectional view along line **III-III** of Fig. 1 (enlarged scale as compared to Fig. 2),
Fig. 4 is a sectional view along line IV-IV of Fig. 1 (enlarged scale as compared to Fig. 2),
Fig. 5 shows a sectional view after forming the BEOL layers,
Fig. 6 shows the view of Fig. 5 after a first etching step,
Fig. 7 shows the view of Fig. 6 after adding the protective layer,
Fig. 8 shows the view of Fig. 7 after further etching steps and after addition of a separating layer,
Fig. 9 shows the view of Fig. 8 after adding the metal structure and the electro-optical material,
Fig. 10 shows the view of Fig. 9 after adding the cover layer,
Fig. 11 shows a sectional view similar to Fig. 2 of a second embodiment of the plasmonic device,
Fig. 12 shows a top view of a third embodiment of a plasmonic device,
Fig. 13 shows a fourth embodiment of a plasmonic device,
Fig. 14 shows a top view of a fifth embodiment of a plasmonic device and
Fig. 15 shows a sixth embodiment of a plasmonic device.

Note: The figures are not to scale.

### Modes for Carrying Out the Invention

### Definitions

*A plasmonic waveguide* as used herein is a waveguide having at least one interface between a material having a permittivity with a negative real part (e.g. a metal or a strongly doped semiconductor) and a material having a positive real part of its permittivity (e.g. a dielectric) at the wavelength/frequency of operation, allowing light to propagate along this interface. Accordingly, such a plasmonic waveguide comprises a first structure with a permittivity having a negative real part and a second structure with a permittivity having a positive real part.

The first structure is advantageously of gold or silver, but it may e.g. also be copper or aluminum. As mentioned, it may also be a strongly doped semiconductor.

If a plasmonic waveguide of this type is combined with a dielectric and/or semiconductor waveguide and running parallel with the plasmonic waveguide, the resulting structure is also called "hybrid plasmonic waveguide. Hybrid plasmonic waveguides have comparatively low loss while still being able to confine light to a small volume.

*A plasmonic device* as used herein is a device comprising at least one plasmonic waveguide.

*Light* as used herein is understood to encompass infrared, visible, and/or ultraviolet light, advantageously in a vacuum wavelength range between 0.25 µm and 6 µm. Advantageously, the plasmonic device is adapted to process light with a vacuum wavelength between 1 µm and 6 µm where the absorption of silicon is low or 0.9 µm and 5 µm where the absorption of GaAs is low. In particular, the light used for the present device has a wavelength between 1.260 µm and 1.625 µm.

The *vertical* direction is the direction perpendicular to the substrate of the device, with *top* and *down* being defined as the BEOL structure being located on top of (i.e. above) the FEOL structure. Terms such as "above" and "below" refer to this definition of vertical.

Any *horizontal* direction extends perpendicularly to the vertical direction.

In the context of the present text, a semiconductor is considered to be a dielectric (due to its waveguiding properties) unless otherwise noted.

*A metal lead* or *conducting lead* is an electrically conducting metal track or conducting track.

### First embodiment, not being part of the claimed invention

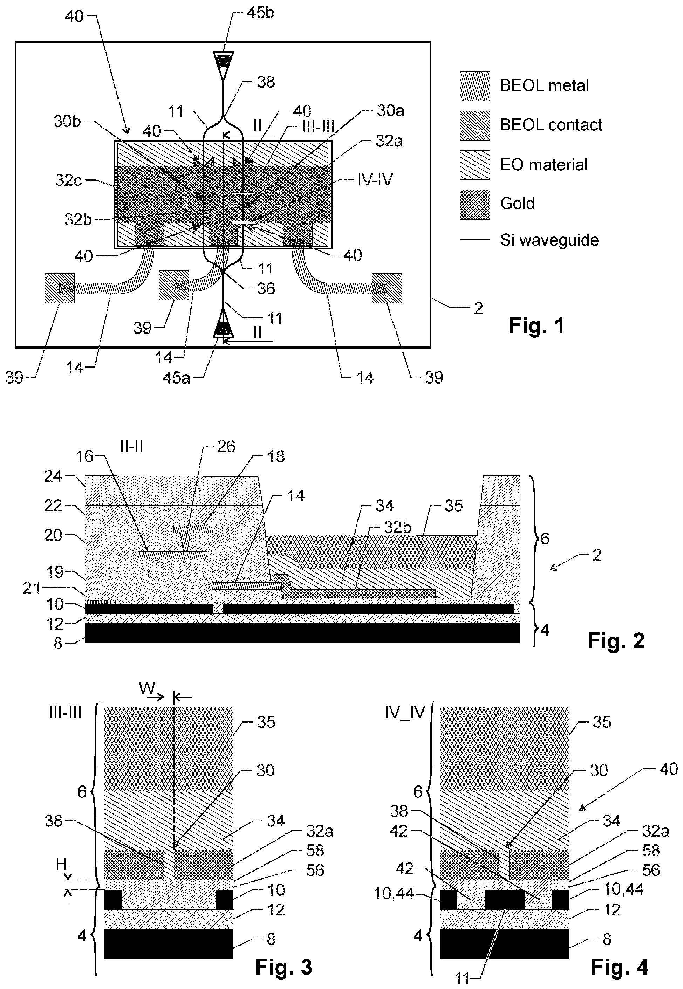

A first embodiment of a plasmonic device is shown in Figs. 1 - 4. It comprises a substrate 2 with various components integrated therein.

The device comprises a "front end of line" (in the following: FEOL) structure 4 and a "back end of line" (in the following BEOL) structure 6, with BEOL structure 6 mounted to the top of FEOL structure 4.

FEOL structure 4 advantageously comprises at least one mono-crystalline semiconductor layer. In the present embodiment, there are two such layers: a substrate layer 8 and a waveguide-forming semiconductor layer 10, with a buried oxide layer 12 being arranged between them.

Alternatively, and in all embodiments, waveguide-forming semiconductor layer 10 may be a non-semiconductor dielectric, such as a silicon nitride layer. Hence, in the following, layer 10 is generally termed a "waveguide-forming layer. In the following, layer 10 will therefore be called "dielectric layer" 10.

BEOL structure 6 comprises a plurality of horizontal, structured metal layers 14, 16, 18 and horizontal dielectric layers 19, 20, 22, 24. The metal layers 14, 16, 18 are structured to form electrical leads and may be interconnected by vias 26.

(Note: Fig. 2 shows, for illustration purposes, metal leads formed by the metal layers 16 and 18 as well as a via 26 that are now shown in Fig. 1.)
The metal layers 14, 16, 18 and vias 26 may e.g. of copper and/or tungsten. The dielectric layers 19, 20, 22, 24 may e.g. be of silicon oxide or silicon nitride.

Waveguide-forming layer 10 forms one or more dielectric waveguides 11, advantageously semiconductor waveguides 11, typically for infrared light (see above). In addition, the same waveguide-forming layer 10 can be used, if it is a semiconductor layer 10, to form parts of transistors, diodes, or other semiconductor elements, electrical leads, heaters, etc.

If layer 10 is a semiconductor layer, may be doped differently at different locations. Advantageously, it is non-doped (i.e. only very weakly doped or not doped at all) where it acts as a dielectric waveguide 11 while it may be strongly doped in areas where it forms diodes, transistors, electrically conductive structures, or other semiconductor devices.

The device further forms at least one plasmonic waveguide 30 having a conducting structure 32a, 32b, 32c (the "first structure" in the sense above) and a dielectric structure 34 (the "second structure" in the sense above).

A protective cover layer 35 may be provided to protect dielectric structure 34 from the environment, e.g. in order to prevent oxidation or undesired changes in humidity in the region of plasmonic waveguide 30.

In the embodiment of Fig. 1, the device comprises two plasmonic waveguides 30a, 30b arranged between a beam-splitter 36 and a beam-combiner 38. Beam splitter 36, the two plasmonic waveguides 30a, 30b, and beam-combiner 38 together form an interferometer-type modulator, such as e.g. described by W. Heni et al. in Nature Communications (2019)10:1694, https://doi.org/10.1038/s41467-019-09724-7.

Each plasmonic waveguide 30 is formed at the interface between the conducting structure 32a, 32b, 32c and the dielectric structure 34.

Advantageously, and as shown in Fig. 3, each plasmonic waveguide 30 comprises two metal bodies (32a, 32b for waveguide 30a and 32b, 32c for waveguide 30b) formed by the metal structure with a slot 38 being arranged between them. At least part of dielectric structure 34 is arranged in slot 38.

Dielectric structure 34 is, at least in the region of slot 38, advantageously an electro-optic material, i.e. a material that changes its refractive index under the application of an electrical field, such that it can be used to generate an electrically induced phase delay in the plasmonic waveguide.

At the beginning and the end of each plasmonic waveguide 30a, 30b, a waveguide coupler 40 is provided for coupling light between a dielectric waveguide 11 and the plasmonic waveguide 30, as shown in Fig. 4. In this region, slit 38 is close to dielectric waveguide 11, advantageously with the distance between them being less than 1 µm, such that the evanescent field of the light in each one of the waveguides couples with the respective other waveguide.

In the shown embodiment, waveguide 11 is interrupted between the couplers 40. Alternatively, it may continue between them, e.g. with a modified dimensions to prevent it from guiding light. Alternatively, it may even continue as a waveguide.

In the shown embodiment, the bodies 32a, 32b, 32c of conducting structure 34 are electrically connected to at least one of the metal layers of BEOL structure 6, which allows to apply a voltage to them or to detect the voltage over them. This may be used for poling the dielectric in slot 38 during manufacture (see below) and/or for applying a voltage for electro-optic modulation in operation.

In the first embodiment, the bodies 32a, 32b, 32c are electrically connected to one of the two bottommost metal layers (here: layer 14) of BEOL structure 6, from where a connection is made, by means of one or more vias 26 and, optionally, other metal layers 16, 18 of BEOL structure 6, to contact pads 39 accessible from the top side of BEOL structure 6.

On a general note, Fig. 1 only shows the dielectric waveguides 11 of waveguide-forming layer 10. Typically, and as shown in Fig. 4, each dielectric waveguide 11 is laterally arranged between two regions 42 of lower refractive index, e.g. of a dielectric such as silicon oxide. Beyond these regions, waveguide-forming layer 10 may continue, as shown in regions 44 of Fig. 4, even though these regions do not necessarily need to be used as dielectric waveguides.

Fig. 1 further shows light couplers 45a, 45b for coupling light into and out from at least one of the waveguides 11. In the shown embodiment, these couplers are grating couplers adapted to couple light travelling transversally to substrate 2 into and/or out from one of the waveguides 11. In addition or alternatively thereto, edge couplers located at an edge of substrate 2 or other couplers may e.g. be used.

### Manufacturing

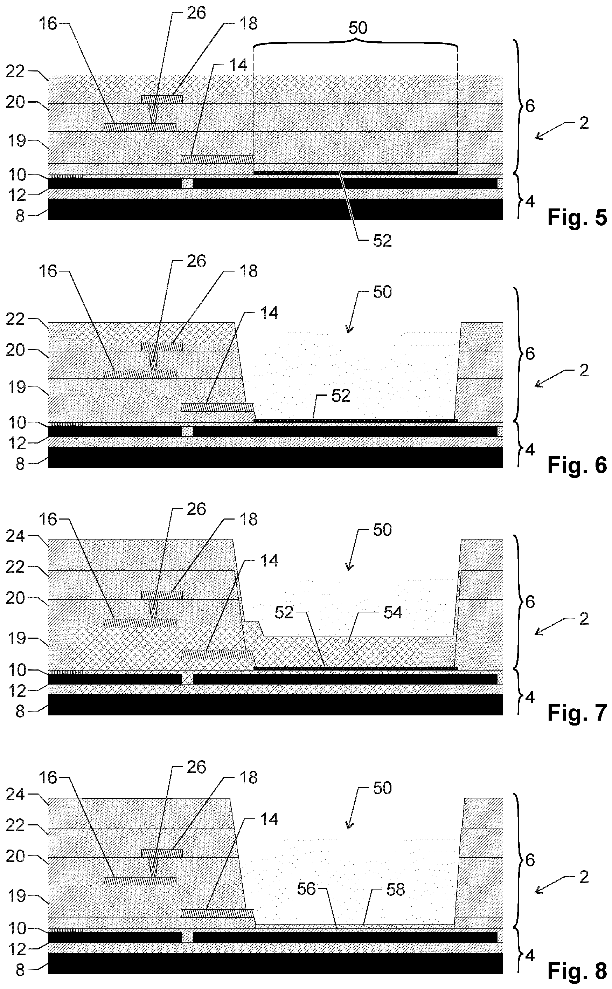

Steps for manufacturing such a device are now described with reference to Figs. 5 - 10.

In a first step a), FEOL structure 4 is formed.

In a second step b), at least part of BEOL structure 6 is formed by depositing and structuring several of the dielectric layers 19, 20, 22, 24 and several of the metal layers 14, 16, 18.

Steps a) and b) typically involve standard processes as they are carried out by semiconductor foundries.

In particular, the two layers 8, 10 and the buried oxide layer 12 may be manufactured using SOI technology as known to the skilled person, even though non-SOI technology, where all the layers are e.g. subsequently added to bottommost substrate layer 8, may be used as well.

In steps a) and b), the various layers of FEOL structure 4 and BEOL structure 6 are structured using micro- /nano-lithography and etching/structuring techniques as known to the skilled person.

At the end of step b), and as shown in Fig. 5, BEOL structure 6 comprises at least a plurality of the structured metal layers 14, 16, 18 interconnected by vias 26 and separated by a plurality of the dielectric layers 19, 20, 22.

BEOL structure 6 comprises a target area 50, the approximate limits of which are shown in dashed lines in Fig. 5. As described below, material of the BEOL structure is etched off in this target area. To make such etching easier, target area 50 is advantageously mostly free of structured metal layers 14, 168, 18.

Hence, advantageously, after step b) and prior to the subsequent etching step, the structured metal layers 14, 16, 18 of the BEOL structure cover no more than 20% of the target area.

In one embodiment, at least the region vertically above the (later) slot or slots 38 between the metal bodies 32a - c should be free of the structured metal layers 14, 16, 18, thereby providing good access to form the slot(s) 38 in later steps. Hence, after the step b) and prior to subsequent etching, the structured metal layers 14, 16, 18 of BEOL structure 6 do advantageously not cover the slot or slots 38.

While manufacturing BEOL structure 6 in step b), or prior thereto, an etch stop layer 52 may be formed in target area 50. Etch stop layer 52 may be part of BEOL structure 6 and/or part of FEOL structure 4.

In particular, etch stop layer 52 extends at least over the area of the dielectric waveguides and the plasmonic waveguides. Advantageously, etch stop layer 52 extends over all of target area 50.

Advantageously, etch stop layer 52 comprises, in particular consists of, polysilicon or metal. It may, however, also be of another material, such as Si3N4 and/or Al2O3, as long as it has distinctly different etching properties than at least some of the dielectric layers 19 - 24 of BEOL structure 6. Etch stop layer 52 may also comprise several sublayers, e.g. a layer of polysilicon on a layer of oxide.

An etch stop layer of polysilicon or metal is advantageous because layers of these materials already exist and are used in standard FEOL and/or BEOL structures 4, 6 as manufactured by most foundries. Polysilicon is particularly advantageous because it is often the bottommost non-dielectric layer in standard BEOL structures 6 or one of the topmost layers of a standard FEOL structure.

In a step c), after the steps a) and b), at least most of BEOL structure 6 is removed in target area 50, to a distance of no more than 1 µm to dielectric waveguide 11. In other words, the distance between at least some parts of the removed volume of space in BEOL structure 6 and the dielectric waveguide should be small enough to create optical coupling between the dielectric waveguide 11 and the plasmonic waveguide added to the removed volume as described below.

Step c) e.g. first comprises, as shown in Fig. 6, the step of etching BEOL structure 6 while using etch stop layer 52 to stop the etching. In a later step, Etch stop layer 52 can then be removed partially or completely.

Advantageously, though, after etching BEOL structure 6 while using etch stop layer 52 as an etch stop but before removing etch stop layer 52, a dielectric protective layer 54 may be added on top of etch stop layer 52. This is shown in Fig. 7.

Protective layer 54 may e.g. be an oxide or nitride, such as a silicon oxide or silicon nitride, in particular if part of it is to remain in the final device. It may also be of another material, such as a photoresist, which makes its removal easier.

This protective layer 54 protects the device from above, e.g. for shipping it from the foundry that manufactured the FEOL and BEOL structures 4, 6 to another site where subsequent process steps (as described in the following) are carried out. This is particularly useful if, as in the examples below, these subsequent process steps include steps that a regular semiconductor foundry is not equipped or does not allow to perform.

Before carrying out such subsequent process steps, protective layer 54 is removed again, by means of etching, again using etch stop layer 52 as an etch stop. Protective layer 54 is advantageously removed at least in part of target area 50, in particular at the locations of the couplers 40, which allows getting close to dielectric waveguide 11 at these locations.

Next, etch stop layer 52 may be removed, too, advantageously at least in the regions of the plasmonic waveguides 30a, 30b and of the optical waveguides 11.

At this point, waveguide-forming layer 10 is typically still covered by a thin dielectric cover layer 56 (see Figs. 3, 4, and 8), which e.g. has a thickness of around 100 nm or even less.

If this dielectric cover layer 56 is very thin or if it does not exist, it is advisable to apply a dielectric spacer layer 58 in at least part of the target area. This spacer layer 58 is added after removing at least part of etch stop layer 52 and before adding the conducting structure 32a, 32b, 32c and the dielectric structure 34 of the plasmonic waveguide.

This allows to increase the vertical distance H between the metal bodies of metal structure 32a, 32b and the waveguide-forming layer 10 as depicted in Fig. 3. Vertical distance H is advantageously at least 25%, in particular at least 50%, of the width W of slot 38. This reduces the risk of dielectric breakdown.

The exact minimum ratio of H/W is a function of ratio of the permittivities of the permittivity in slot 38 and the permittivity of the material between the metal bodies of metal structure 32 and the waveguide-forming layer 10. H/W > 0.25, in particular H/W > 0.5, is a reasonable limit if these permittivities are of similar value.

In other words, the device advantageously comprises at least one dielectric layer (here: the layers 56, 58) adjacent to and under the conducting structure 32a, 32b, 32c of the plasmonic waveguide, with the thickness H of the dielectric layer(s) being at least 25%, in particular at least 50%, of the width W of slot 38.

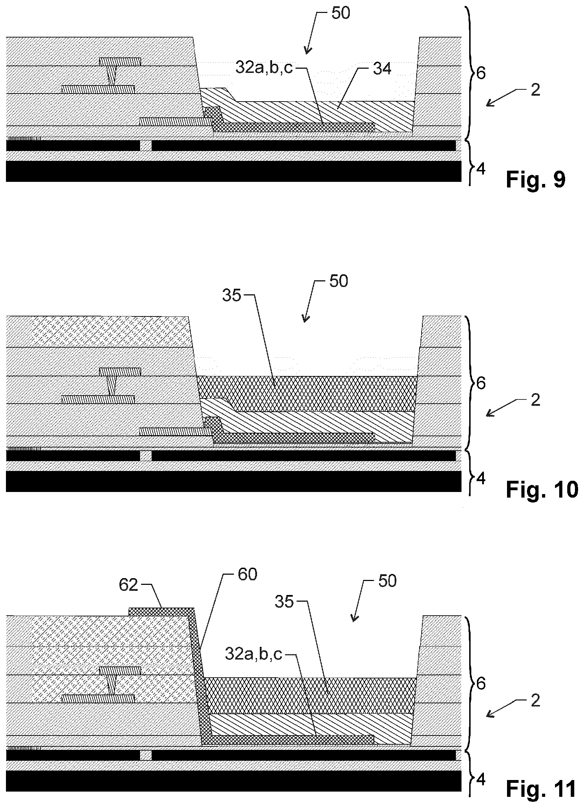

Next, in a step d), and as shown in Fig. 9, the plasmonic waveguide 30 is manufactured in target area 50.

For example, in a first step, a metal layer, in particular a layer of gold, is deposited and structured to form the conducting structure 32a, 32b, 32c. In particular, structure 32a, 32b, 32c forms the one or more slits 38 (cf. Fig. 3).

In the shown embodiment, structure 32a, 32b, 32c comprises three bodies forming two slots 38. Only two bodies are required for a single slot. If the plasmonic waveguide is arranged at a single interface (and not a slot-structure) between the first and second material, only a single body is required.

In the present embodiment, and as shown in Figs. 1, 2, and 9, metal structure 32a, 32b, 32c is connected to at least one of the metal layers of BEOL structure 6. For this purpose, (at least) one metal layer 14 of the metal layers may end at the edge of target area 50, and it is exposed when etching BEOL structure 6. When depositing conducting structure 32a, 32b, 32c, it is, in the present embodiment, structured to contact the exposed part of metal layer 14.

Instead of metal layer 14, any other conducting layer of BEOL structure 6 may e.g. be used.

Advantageously, the conducting structure 32a, 32b, 32c is electrically connected to the second bottommost metal layer 14 of BEOL structure 6 because that layer is typically closest to conducting structure 32a, 32b, 32c. (Note, BEOL structure 6 has a further (bottommost) metal layer at the height of dielectric layer 21 of Fig. 2, which may be used to form vias between layer 14 and FEOL structure 4. That bottommost metal layer can also be used for contacting the conducting structure 32a, 32b, 32c.)

Instead of a conducting a metal layer of BEOL structure 6, another conducting layer of BEOL structure 6, such as polysilicon layer 52, may be used for contacting the conducting structure 32a, 32b, 32c. Or, alternatively, a conducting layer of the FEOL structure 4, such as a highly doped silicon layer, may be used.

After forming conducting structure 32a, 32b, 32c, dielectric structure 34 is deposited in target area 50. At least part of dielectric structure 34 extends into slit 38.

Advantageously, dielectric structure 34 is an organic material because some of these materials are known to exhibit strong nonlinear optical or electro-optic effects. In particular, it may be an amorphous material with polar linear electro-optical or second-order or third-order nonlinear optical molecules, and/or it may be a polymer with polar, linear electro-optic or second-order nonlinear optical side groups, where the polar molecules or side groups can be poled (i.e. at least partially aligned) in a process as described below. For example, the material may comprise an organic dye, organic crystals, organic electro-optic polymers, chromophores, composite materials, disperse red 1 (DR1), SEO100, SEO125, SEO250, GigOptix M3, JRD1, YLD124, HLD, AJCKL1, or any of the previous materials in a host material such as poly methyl methacrylate (PMMA), e.g. DR1 in PMMA or amorphous polycarbonate (APC), e.g. AJCKL1 in APC. The organic optical material may be a chromophore material.

In a next step, as shown in Fig. 10, protective cover layer 35 as mentioned above may be deposited to protect dielectric structure 34. For example, protective cover layer 35 may comprise SiO₂, Al₂O₃, ZnO, HfO₂, ZrO₂, ZnO, SiN, silicon oxynitride, TiO₂, TiN, and/or organic materials or a combination of such materials.

As mentioned, dielectric structure 34 may by an amorphous material having polar components. In order to e.g. achieve linear electro-optic or second order nonlinear optical effects, this material needs to be poled. This may be achieved by applying a voltage to the bodies 32a, 32b, 32c of the conducting structure, such as e.g. described in section 2.3.4 and Fig. 2.3.8 of W. Heni, *Plasmonic-Organic Hybrid Modulators,* Dissertation ETH 25785 of the ETH Ziirich, https://doi.org/10.3929/ethz-b-000353598.

In the context of this poling operation, the dielectric layers 56, 58 prevent reduce the risk of dielectric breakdown as described above.

### Second embodiment

In the embodiment above, conducting structure 32a, 32b, 32c is connected to at least one metal layer (e.g. metal layer 14) of BEOL structure 6. In addition or alternatively thereto, a design as shown in Fig. 11 may be used. Here, an electrically conducting lead 60 has been formed at the edge of target area 50. This lead extends from conducting structure 32a, 32b, 32c to the top of BEOL structure 6 and there to a contact pad 62. Contact pad 62 may have been fabricated in the BEOL process.

In yet another embodiment, contact pad 62 may be located in the target area.

Lead 60 may be deposited and structured, after etching off the BEOL structure in step c), together with at least part of conducting structure 32a, 32b, 32c, or it may be deposited and structured separately from conducting structure 32a, 32b, 32c and it may consist of a material different from conducting structure 32a, 32b, 32c.

The first and second embodiment may be combined, e.g. by contacting a first part of conducting structure 32a, 32b, 32c to at least one metal layer 14, 16, 18 of BEOL structure 6 and a second part of conducting structure 32a, 32b, 32c to a lead 60.

### Third embodimen

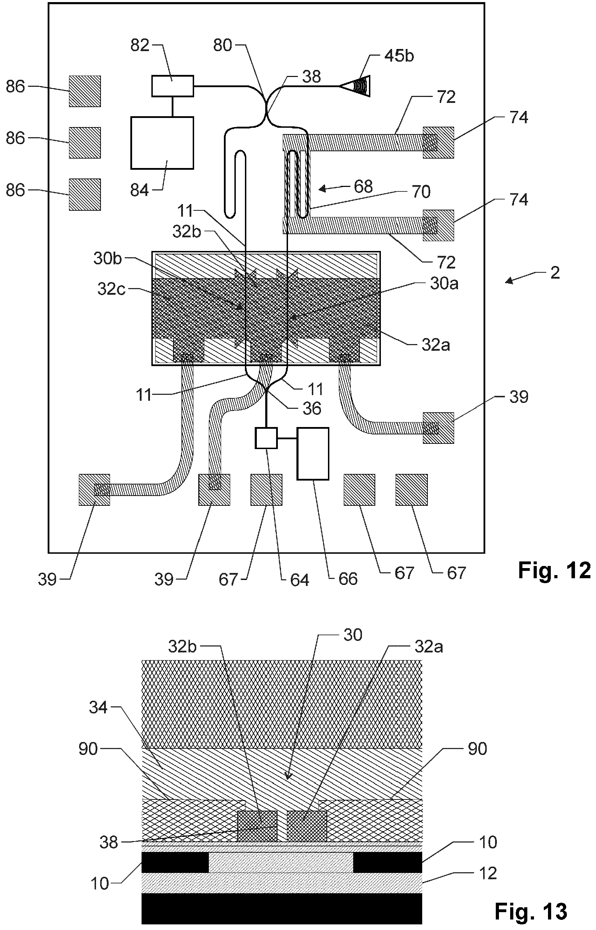

Fig. 12 shows a top view of a third embodiment of the present device, which illustrates how the present technique can be combined with elements that are manufactured using conventional semiconductor processing, in particular with elements that are manufactured using standard CMOS process steps. These additional elements are integrated in the same substrate 2 as the dielectric waveguides 11 and the plasmonic waveguides 30a, 30b.

The shown device comprises two plasmonic waveguides 30a, 30b arranged in an interferometer between a beam splitter 36 and a beam combiner 38 similar to the one of Fig. 1.

Further, at least one of the following elements may be arranged in substrate 2:
- A semiconductor light source 64 may be optically coupled to dielectric waveguide 11 (or at least some of the dielectric waveguides 11) for coupling light into dielectric waveguide 11. Semiconductor light source 64 may e.g. be an LED or a semiconductor laser. It may be implemented using hybrid integration by placing a semiconductor laser device on FEOL structure 4 in optical contact with dielectric waveguide 11, but it may also be implemented using at least part of the layers in the FEOL structure 4 and/or at least part of the layers of BEOL structure 6. Driving or control circuitry 66 may optionally be provided for driving or controlling the light source 64 or other components on the substrate, integrated in substrate 2. Contact pads 67 may be arranged on substrate 2 for contacting light source 64 and/or driving circuitry 66. (The electrical leads between light source 64 and/or driving circuitry 66 may be formed by the metal layers of the BEOL structure and are not shown in Fig. 12.)
- A photonic phase shifter 68, such as a phase shifter using the thermo-optic or plasma-dispersion effect, may be optically coupled to dielectric waveguide 11 (or at least one of the dielectric waveguides 11). In the shown embodiment, it is implemented by placing at least one heater element 70 along a section of waveguide 11. Heater element 70 may be advantageously formed in parts of waveguide-forming layer 10 close to waveguide 11 and/or in polysilicon layer 52 and/or in at least one of the metal layers, in particular one of the two bottommost metal layers (e.g. layer 14) or a dedicated heater metal layer, of BEOL structure 6. Electrical leads 72 may e.g. be formed in BEOL structure 6 for connecting heater element 70 to contact pads 74 on substrate 2. In the shown embodiment, phase shifter 68 is mounted in at least one arm of the interferometer formed between beam splitter 36 and beam combiner 38.
- A light detector 82 may be optically coupled to dielectric waveguide 11 (or at least some of the dielectric waveguides 11). Light detector 82 may e.g. be a photodiode. It is typically implemented using layers in the FEOL structure 4 and, optionally, some layers of BEOL structure 6. Detection circuitry 84 may optionally be provided for processing the signal from light detector 82, again integrated in substrate 2. Detection circuitry 84 may also be structured to control the photonic phase shifter 68 for setting the operating point of the modulator. Contact pads 86 may be provided on substrate 2 for contacting light detector 82 and/or detection circuitry 84. (The electrical leads between light detector 82 and/or detection circuitry 84 may be formed by the metal layers of the BEOL structure and are not shown in Fig. 12.)
- A further beam splitter 80 may be provided, e.g. formed by waveguide-forming layer 10, for splitting up the signal after the interferometer. In the present embodiment, beam splitter 80 is e.g. used to split the light after the interferometer between light detector 82 and outcoupler 45b.

This illustrates only some of the various elements that can be advantageously integrated on the same substrate as the waveguides 11 and the plasmonic waveguides(s) 30a, 30b.

These elements can be manufactured using the same processes that are used for FEOL structure 4 and BEOL structure 6.

Hence, in an advantageous embodiment, the device comprises at least one element from the group of semiconductor light sources, semiconductor light detectors, electrical driving and/or processing circuitry, and photonic phase shifters (e.g. thermo-optic or plasma-dispersion), wherein the element is formed at least in part by FEOL structure 4 and/or BEOL structure 6 and/or by means of a hybrid integration process.

### Fourth embodiment

Fig. 13 shows a sectional view of a plasmonic waveguide 30 similar to Fig. 3. It differs from the embodiment of Fig. 4 in that the metal bodies 32a, 32b are smaller, and a further electrically conducting feed structure 90 is provided laterally to the metal bodies 32a, 32b for contacting the metal bodies 32a, 32b to the contact pads 39. The feed structure 90 may be of a material different form the conducting structure 32a, 32b, 32c (i.e. of a material different form the metal bodies).

This geometry has the advantage to provide a more design flexibility for the conducting structure 32a, 32b in that it can be optimized for plasmonic waveguide formation while feed structure 90 can be optimized for providing electrical contact and leads. In particular, conducting structure 32a, 32b may be of gold and/or silver while feed structure may be of a different metal, such as copper, aluminum, and/or tungsten or an alloy.

Hence, in an advantageous embodiment, the invention also relates to a method of manufacturing of this type comprising an electrically conducting feed structure 90 horizontally and/or vertically adjacent to the conducting structure 32.

Advantageously, feed structure 90 is manufactured after step c), i.e. after removing the BEOL structure 6 in target area to a distance of no more than 1 µm of the dielectric waveguide. In particular, feed structure 90 may be manufactured after the fabrication of the conducting structure 32.

### Fifth embodiment

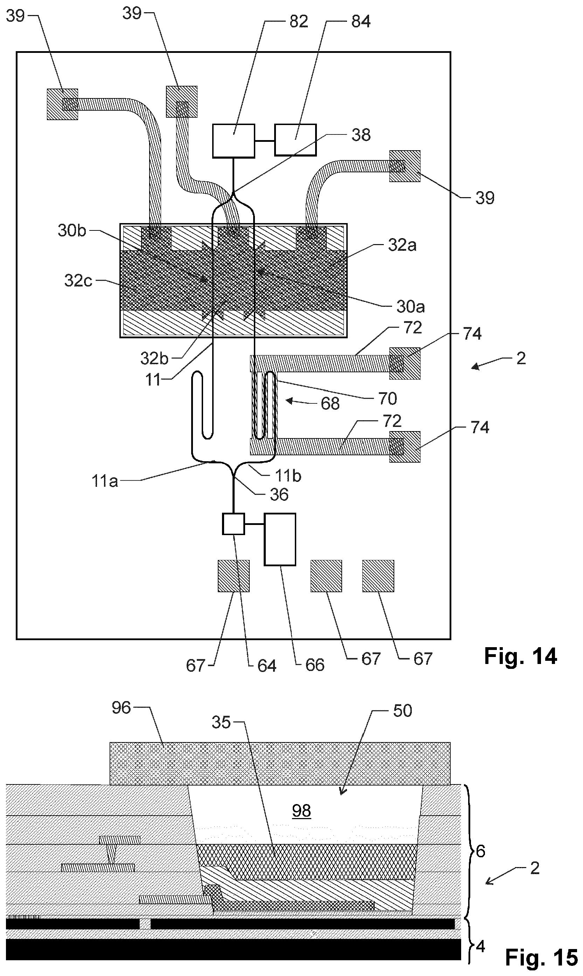

Fig. 14 shows a fifth embodiment illustrating an advantageous design aspect of an interferometer-type modulator. As in the third embodiment shown in Fig. 12, the modulator comprises a beam splitter 36 connected to a light source 64. Light source 64 may be part of the device, as shown, or be external to the device with a suitable input coupler provided on the device. The modulator further comprises a beam combiner 38. Beam combiner 38 is connected to an output coupler and/or a light detector 82. Typically, it is connected at least to an output coupler, which is not shown in Fig. 14. Fig. 14 only shows the light detector 82.

Further, the device comprises a photonic phase shifter 68, such as a phase shifter using the thermo-optic or plasma-dispersion effect, similar as the one of Fig. 12.

In contrast to the third embodiment, and as shown in Fig. 14, phase shifter 68 is arranged between beam splitter 36 and one of the plasmonic waveguides 30a, 30b. In other words, the light first traverses phase shifter 68 before arriving at the plasmonic waveguide.

Phase shifter 68 is used to adjust the operating point of the light modulator, such as by setting the output intensity after beam combiner 38 to half of the maximum light intensity when no voltage is applied to the plasmonic waveguide(s) 30a, 30b. For this setting, the modulator has a linear intensity response to the applied electric voltage at the plasmonic waveguides with maximum sensitivity. Alternatively, the output intensity after the beam combiner 38 may be set to zero when no voltage is applied to the plasmonic waveguide(s) 30a, 30b. For this setting, the modulator has a linear amplitude response. The operating point may, however, also be set to any other point.

By placing phase shifter 68 before the plasmonic waveguide 30a, 30b, the delay times between each plasmonic waveguide 30a and 30b, respectively, and beam combiner 38 are the same and independent of the phase shift generated by phase shifter 68. This is of importance for high-frequency modulators in the GHz-range where the light travels a few cm or less in one modulation cycle: because the phase modulations in the two plasmonic waveguides 30a, 30b are synchronous but opposite, any time difference of the light running in the two channels of the interferometer from the plasmonic waveguides 30a, 30b to the beam combiner will reduce the signal contrast.

Hence, advantageously, the device comprises an interferometer modulator having a beam splitter 36 and a beam combiner 38 with two optical paths 11a, 11b extending between the beam splitter 36 and the beam combiner 38. It further comprises two plasmonic waveguides 30a, 30b forming electro-optic phase modulators in the two optical paths 11a, 11b as well as well as a tunable phase shifter 68, in particular an electrically tunable phase shifter, arranged between beam splitter 36 and one of the plasmonic waveguides 30a, 30b.

Advantageously, the phase shifter 68 is a thermo-optic or plasma-dispersion phase shifter.

This type of device is advantageously operated by sending light into the interferometer modulator from the side of the beam splitter 36, thereby generating the modulated light after interference the beam combiner 38.

### Sixth embodiment

Fig. 15 shows a sectional view of a sixth embodiment of the device. Here, a protective plate 96 has been placed over target area. In this context, a plate is any structure covering all of target area 50 and connected, in a continuous region surrounding target area 50, to the top of BEOL structure 6.

It is hermetically sealed against the top of BEOL structure 6 and supports or replaces protective layer 35 in protecting the plasmonic waveguide from environmental influence.

In this context, a "hermetical seal" is a gas-tight and/or water-tight and/or humidity-tight seal.

Advantageously, protective plate 96 is rigid in the sense that it can span a cavity 98 beneath it. Cavity 98 may be filled with an inert gas.

For example, protective plate 96 (which may be much thicker than shown in Fig. 15) is a glass or silicon plate attached to the top side of BEOL structure 6 by means of bonding.

Protective plate 96 may cover a major part of the top side of BEOL structure 6 or only target area 50 and a narrow region around it. Advantageously, though, it does not cover any contact pads provided there.

Hence, advantageously, in the device further comprises a protective plate 96 vertically above the plasmonic waveguide 30, in particular at the location of target area 50, which protective plate 96 is hermetically sealed against the top side of the BEOL structure 6.

In particular, the device comprises a cavity 98 located between the protective plate 96 and the plasmonic waveguide 30.

### Notes

In the above embodiments, the semiconductor material is silicon. Alternatively, though, another semiconductor material may be used, in particular GaAs, InP, or GaₓIn₁₋ₓAs_{y}P_{1-y}.

Waveguide-forming layer 10 may be of said semiconductor material. Alternatively, waveguide-forming layer 10 may, as mentioned, be of another dielectric, such as silicon nitride.

Also, for most standard foundry stacks, FEOL structure 4 advantageously comprises at least one semiconductor layer, and this layer can advantageously be used as waveguide-forming layer 10. However, if waveguide-forming layer 10 is to be of a different material, such as silicon nitride, or of a different layer, FEOL structure 4 may comprise a semiconductor layer, in particular a monocrystalline semiconductor layer, in addition to the waveguide-forming layer 10.

In the embodiments above, slot 38 of plasmonic waveguide 30 is vertical, i.e. the plasmonic waveguide comprises at least a section of the second structure 34 with two parts of conducting structure or first structure 32a, 32b, 32c arranged on opposite sides and horizontally next to it.

Alternatively, slot 38 may be horizontal, i.e. the plasmonic waveguide comprises at least a section of the second structure 34 with two parts of conducting structure or first structure 32a, 32b, 32c adjacently above as well as below it.

Advantageously, the plasmonic waveguide extends horizontally, i.e. parallel to substrate 2.

It must be noted that the plasmonic waveguide is, as mentioned, not necessarily a slot-type waveguide. For example, it may comprise a structure comprising a layer of the second structure (such as a dielectric layer) arranged between a layer of the "first structure" (such as a gold or silver layer) and a dielectric waveguide, with the layer of the second structure being sufficiently thin such that the evanescent field of the light guided in the dielectric waveguide couples into the plasmonic waveguide formed at the interface between the first and second structure.

Further, in the above embodiments, the plasmonic waveguide is arranged higher in the device than the dielectric waveguide. Alternatively, though, the plasmonic waveguide can also be arranged at the same height as the dielectric waveguide, i.e. in the same plane, such as described by W. Heni et al. in Nature Communications (2019)10:1694, https://doi.org/10.1038/s41467-019-09724-7 in reference to Fig. 1b.

In the above examples, the electro-optic material of second structure 34 directly contacts the surface of first structure 32a, 32b, 32c. Alternatively, though, second structure 34 may comprise several layers, such as a buffer layer arranged between the surface of first structure 32a, 32b, 32c and the electro-optic material. For example, such a buffer layer may be used if the electro-optic material should, for chemical reasons, not be in direct contact with the surface of first structure 32a, 32b, 32c.

In the above embodiments, the conducting layers 14, 16, 18 of the BEOL structure 6 are metal layers. Some of them may also be non-metallic layers, such as highly doped waveguide-forming layers, such as doped polysilicon layers.

In the above embodiments, the present device comprises a Mach-Zehnder type interferometer for light modulation. There are various other light processing devices based on plasmonic phase shifters know to the skilled person, such as resonant structures: A. Messner et al., " 2020 European Conference on Optical Communications (ECOC), 2020, doi:10.1109/ECOC48923.2020.9333272, phased array feeders: Bonjour, Romain, et al. Optics Express 24.22 (2016): 25608-25618. https://doi.org/10.1364/OE.24.025608, or mixers : Salamin, Yannick, et al. Nature photonics 12.12 (2018): 749-753 https://doi.org/10.1038/s41566-018-0281-6.

Also, the device can comprise several modulators, e.g. based on Mach Zehnder type interferometers, such as e.g. shown by W. Heni et al. in Nature Communications (2019)10:1694, https://doi.org/10.1038/s41467-019-09724-7, Fig. 1a.

Etch stop layer 52 may be dispensed with if etching is stopped by other means, e.g. using appropriate timing.

While there are shown and described presently preferred embodiments of the invention, it is to be distinctly understood that the invention is not limited thereto but may be otherwise variously embodied and practiced within the scope of the following claims.

## Claims

1. A method for manufacturing a plasmonic device comprising the steps of
a) manufacturing an FEOL structure (4) comprising a waveguide-forming layer (10), wherein the waveguide-forming layer (10) is structured to form at least one dielectric waveguide (11),
b) manufacturing at least part of a BEOL structure (6) on top of the FEOL structure (4) by depositing and structuring several horizontal metal layers (14, 16, 18) and several horizontal dielectric layers (19, 20, 22, 24) on the FEOL structure (4),
c) after the step b), removing, in a target area (50), the BEOL structure (6) to a distance of no more than 1 µm of the dielectric waveguide (11),
d) after the step c), forming, in the target area (50), a plasmonic waveguide (30) coupled to the dielectric waveguide (11), with the plasmonic waveguide (30) having a first structure (32a, 32b, 32c) with a permittivity having a negative real part and a second structure (34) with a permittivity having a positive real part.

2. The method of claim 1 wherein the first structure (32a, 32b, 32c) comprises a structure of metallic silver and/or gold and/or copper, in particular silver and/or gold.

3. The method of any of the preceding claims wherein the BEOL structure (6) and/or the FEOL structure (4) does/do not comprise metallic silver and/or gold.

4. The method of any of the preceding claims wherein, after the step b) and prior to the step c), the structured metal layers (14, 16, 18) of the BEOL structure (6) cover no more than 20% of the target area (50).

5. The method of any of the preceding claims wherein the first structure (32a, 32b, 32c) of the plasmonic waveguide (30) forms two bodies with a slot (38) between them, wherein at least part of the second structure (34) is arranged in the slot (38).

6. The method of claim 5 wherein, after the step b) and prior to the step c), the structured metal layers (14, 16, 18) of the BEOL structure (6) do not cover the slot (38).

7. The method of any of the preceding claims wherein the BEOL structure (4) and/or the FEOL structure (4) comprises an etch stop layer (52), in particular of polysilicon or metal or Al2O3 and/or Si3N4, extending over the target area (50), wherein the method comprises the steps of
in the step c), etching the BEOL structure (6) using the etch stop layer (52) to stop the etching and
subsequently, removing at least part of the etch stop layer (52) in the target area (50).

8. The method of claim 7 comprising the steps of, after etching the BEOL structure (6) using the etch stop layer (52) to stop the etching and before removing at least part of the etch stop layer (52),
adding a protective layer (54) on top of the etch stop layer (52), and
subsequently, removing at least part of the protective layer (54) again.

9. The method of any of the preceding claims comprising the step of, after the step c) but before adding the first structure (32a, 32b, 32c) and the second structure (34) of the plasmonic waveguide (30), adding a dielectric spacer layer (58) in at least part of the target area (50).

10. The method of any of the preceding claims further comprising the steps of
exposing, in the step c), at least one conducting layer, in particular at least one metal layer (14, 16, 18) or a polysilicon layer (52), of the BEOL structure (6) or of the FEOL structure (4), in particular at an edge of the target area (50), and
electrically contacting the first structure (32a, 32b, 32c) to the exposed conducting layer (14, 16, 18, 52) of the BEOL structure (6) or of the FEOL structure (4),
and in particular wherein the exposed conducting layer is at least one of two bottommost metal layers (14) of the BEOL structure (6).

11. The method of any of the preceding claims comprising the step of forming, after the step c), at least one metal lead (60) extending from the first structure (32a, 32b, 32c) over an edge of the target area (50) to a top side of the BEOL structure (6).

12. The method of any of the preceding claims wherein a smallest distance between the plasmonic waveguide (30) and the dielectric waveguide (11) is less than 1 µm.

13. The method of any of the preceding claims wherein the device comprises at least one element from the group of semiconductor light sources (64), semiconductor light detectors (82), electronic driving circuitry and/or processing circuitry (66, 84), and photonic phase shifters (68), in particular thermo-optic or plasma-dispersion phase shifters, wherein the element is formed at least in part by the FEOL structure (4) and/or the BEOL structure (6).

14. The method of any of the preceding claims wherein the second structure (34) of the plasmonic waveguide (30) comprises an organic material.

15. The method of claim 5, wherein the device comprises at least one dielectric layer (56, 58) adjacent to and under the first structure (32a, 32b, 32c) of the plasmonic waveguide (30), wherein a thickness (H) of the dielectric layer(s) is at least 25% of a width (W) of the slot (38).

16. The method of any of the preceding claims wherein the first structure (32a, 32b, 32c) is electrically connected to a metal layer (14) or polysilicon layer (52) of the BEOL structure (6) or the FEOL structure (4), and in particular wherein the first structure (32a, 32b, 32c) is electrically connected to at least one of two bottommost metal layers (14) of the BEOL structure (6).

17. The method of any of the preceding claims wherein the device comprises an electrically conducting feed structure (90) horizontally and/or vertically adjacent to the first structure (32a, 32b, 32c) and of a material different from the first structure (32a, 32b, 32c), and in particular wherein the feed structure (90) is manufactured after the step c).

18. The method of any of the preceding claims wherein the device comprises
an interferometer modulator having a beam splitter (36) and a beam combiner (38) with two optical paths (11a, 11b) arranged between the beam splitter (36) and the beam combiner (38),
two plasmonic waveguides (30a, 30b) forming electro-optic phase modulators in the two optical paths (11a, 11b), and
a tunable phase shifter (68) arranged between the beam splitter (36) and one of the plasmonic waveguides (30a, 30b).

19. The method of any of the preceding claims wherein the waveguide-forming layer (10) is a semiconductor layer and wherein the dielectric waveguide is a semiconductor waveguide.

20. The method of claim 19 wherein the waveguide-forming layer (10) is a monocrystalline semiconductor layer.

21. The method of any of the preceding claims wherein the second structure comprises an electro-optic material.

22. The method of any of the preceding claims, wherein the device further comprises a protective plate (96) vertically above the plasmonic waveguide (30), wherein the protective plate (96) is hermetically sealed against a top side of the BEOL structure (6).

23. The method of claim 22 wherein the device comprises a cavity (98) located between the protective plate (96) and the plasmonic waveguide (30).

## Patentansprüche

1. Verfahren zur Herstellung einer plasmonischen Vorrichtung, umfassend die folgenden Schritte:
a) Herstellen einer FEOL-Struktur (4), die eine wellenleiterbildende Schicht (10) aufweist, wobei die wellenleiterbildende Schicht (10) so strukturiert ist, dass sie mindestens einen dielektrischen Wellenleiter (11) bildet,
b) Herstellen zumindest eines Teils einer BEOL-Struktur (6) auf der FEOL-Struktur (4) durch Aufbringen und Strukturieren mehrerer horizontaler Metallschichten (14, 16, 18) und mehrerer horizontaler dielektrischer Schichten (19, 20, 22, 24) auf der FEOL-Struktur (4),
c) nach dem Schritt b), Entfernen der BEOL-Struktur (6) in einem Zielbereich (50) bis auf einen Abstand von höchstens 1 µm vom dielektrischen Wellenleiter (11),
d) nach dem Schritt c) Bilden eines mit dem dielektrischen Wellenleiter (11) gekoppelten plasmonischen Wellenleiters (30) im Zielbereich (50), wobei der plasmonische Wellenleiter (30) eine erste Struktur (32a, 32b, 32c) aufweist mit einer Permittivität, deren Realteil negativ ist, und eine zweite Struktur (34) mit einer Permittivität, deren Realteil positiv ist.

2. Verfahren nach Anspruch 1, wobei die erste Struktur (32a, 32b, 32c) eine Struktur aus metallischem Silber und/oder Gold und/oder Kupfer, insbesondere Silber und/oder Gold, aufweist.

3. Verfahren nach einem der vorstehenden Ansprüche, wobei die BEOL-Struktur (6) und/oder die FEOL-Struktur (4) kein metallisches Silber und/oder Gold aufweist bzw. aufweisen.

4. Verfahren nach einem der vorstehenden Ansprüche, wobei nach dem Schritt b) und vor dem Schritt c) die strukturierten Metallschichten (14, 16, 18) der BEOL-Struktur (6) nicht mehr als 20 % des Zielbereichs (50) bedecken.

5. Verfahren nach einem der vorstehenden Ansprüche, wobei die erste Struktur (32a, 32b, 32c) des plasmonischen Wellenleiters (30) zwei Körper bildet, zwischen denen sich ein Spalt (38) befindet, wobei zumindest ein Teil der zweiten Struktur (34) im Spalt (38) angeordnet ist.

6. Verfahren nach Anspruch 5, wobei nach dem Schritt b) und vor dem Schritt c) die strukturierten Metallschichten (14, 16, 18) der BEOL-Struktur (6) den Spalt (38) nicht bedecken.

7. Verfahren nach einem der vorstehenden Ansprüche, wobei die BEOL-Struktur (4) und/oder die FEOL-Struktur (4) eine Ätzstoppschicht (52), insbesondere aus Polysilizium oder Metall oder Al¢O£ und/oder Si£N¤, aufweist, die sich über den Zielbereich (50) erstreckt, wobei das Verfahren die folgenden Schritte umfasst:
im Schritt c), Ätzen der BEOL-Struktur (6) unter Verwendung der Ätzstoppschicht (52), um das Ätzen zu stoppen, und
anschliessendes Entfernen zumindest eines Teils der Ätzstoppschicht (52) im Zielbereich (50).

8. Verfahren nach Anspruch 7, umfassend, nach dem Ätzen der BEOL-Struktur (6) unter Verwendung der Ätzstoppschicht (52) zum Stoppen des Ätzens und vor dem Entfernen zumindest eines Teils der Ätzstoppschicht (52), die folgenden Schritte:
Aufbringen einer Schutzschicht (54) auf die Ätzstoppschicht (52) und
anschliessendes Wiederentfernen zumindest eines Teils der Schutzschicht (54).

9. Verfahren nach einem der vorstehenden Ansprüche, umfassend, nach dem Schritt c), jedoch vor dem Aufbringen der ersten Struktur (32a, 32b, 32c) und der zweiten Struktur (34) des plasmonischen Wellenleiters (30), den Schritt des Aufbringens einer dielektrischen Abstandshalterschicht (58) in zumindest einem Teil des Zielbereichs (50).

10. Verfahren nach einem der vorstehenden Ansprüche, das ferner die folgenden Schritte umfasst:
Freilegen, im Schritt c), mindestens einer leitenden Schicht, insbesondere mindestens einer Metallschicht (14, 16, 18) oder einer Polysiliziumschicht (52), der BEOL-Struktur (6) oder der FEOL-Struktur (4), insbesondere an einem Rand des Zielbereichs (50), und
elektrisches Kontaktieren der ersten Struktur (32a, 32b, 32c) mit der freigelegten leitfähigen Schicht (14, 16, 18, 52) der BEOL-Struktur (6) oder der FEOL-Struktur (4),
und insbesondere wobei die freigelegte leitfähige Schicht mindestens eine von zwei untersten Metallschichten (14) der BEOL-Struktur (6) ist.

11. Verfahren nach einem der vorstehenden Ansprüche, umfassend den Schritt des Bildens, nach dem Schritt c), mindestens einer Metallleitung (60), die sich von der ersten Struktur (32a, 32b, 32c) über einen Rand des Zielbereichs (50) zu einer Oberseite der BEOL-Struktur (6) erstreckt.

12. Verfahren nach einem der vorstehenden Ansprüche, wobei ein kleinster Abstand zwischen dem plasmonischen Wellenleiter (30) und dem dielektrischen Wellenleiter (11) weniger als 1 µm beträgt.

13. Verfahren nach einem der vorstehenden Ansprüche, wobei die Vorrichtung mindestens ein Element aus der Gruppe von Halbleiterlichtquellen (64), Halbleiterlichtdetektoren (82), elektronischen Ansteuerschaltungen und/oder Verarbeitungsschaltungen (66, 84) sowie photonischen Phasenschiebern (68), insbesondere thermooptischen oder Plasmadispersions-Phasenschiebern, aufweist, wobei das Element zumindest teilweise durch die FEOL-Struktur (4) und/oder die BEOL-Struktur (6) gebildet wird.

14. Verfahren nach einem der vorstehenden Ansprüche, wobei die zweite Struktur (34) des plasmonischen Wellenleiters (30) ein organisches Material aufweist.

15. Verfahren nach Anspruch 5, wobei die Vorrichtung mindestens eine dielektrische Schicht (56, 58) aufweist, die an die erste Struktur (32a, 32b, 32c) des plasmonischen Wellenleiters (30) angrenzt und unter dieser liegt, wobei eine Dicke (H) der dielektrischen Schicht(en) mindestens 25 % einer Breite (W) des Spalts (38) beträgt.

16. Verfahren nach einem der vorstehenden Ansprüche, wobei die erste Struktur (32a, 32b, 32c) elektrisch mit einer Metallschicht (14) oder einer Polysiliziumschicht (52) der BEOL-Struktur (6) oder der FEOL-Struktur (4) verbunden ist, und insbesondere wobei die erste Struktur (32a, 32b, 32c) elektrisch mit mindestens einer von zwei untersten Metallschichten (14) der BEOL-Struktur (6) verbunden ist.

17. Verfahren nach einem der vorstehenden Ansprüche, wobei die Vorrichtung eine elektrisch leitende Zuführungsstruktur (90) aufweist, die horizontal und/oder vertikal an die erste Struktur (32a, 32b, 32c) angrenzt und aus einem anderen Material als die erste Struktur (32a, 32b, 32c) besteht, und insbesondere wobei die Zuführungsstruktur (90) nach dem Schritt c) hergestellt wird.

18. Verfahren nach einem der vorstehenden Ansprüche, wobei die Vorrichtung Folgendes aufweist:
einen Interferometer-Modulator mit einem Strahlteiler (36) und einem Strahlkombinator (38), wobei zwei optische Pfade (11a, 11b) zwischen dem Strahlteiler (36) und dem Strahlkombinator (38) angeordnet sind,
zwei plasmonische Wellenleiter (30a, 30b), die in den beiden optischen Pfaden (11a, 11b) elektrooptische Phasenmodulatoren bilden, und
einen abstimmbaren Phasenverschieber (68), der zwischen dem Strahlteiler (36) und einem der plasmonischen Wellenleiter (30a, 30b) angeordnet ist.

19. Verfahren nach einem der vorstehenden Ansprüche, wobei die wellenleiterbildende Schicht (10) eine Halbleiterschicht ist und wobei der dielektrische Wellenleiter ein Halbleiterwellenleiter ist.

20. Verfahren nach Anspruch 19, wobei die wellenleiterbildende Schicht (10) eine einkristalline Halbleiterschicht ist.

21. Verfahren nach einem der vorstehenden Ansprüche, wobei die zweite Struktur ein elektrooptisches Material aufweist.

22. Verfahren nach einem der vorstehenden Ansprüche, wobei die Vorrichtung ferner eine Schutzplatte (96) vertikal über dem plasmonischen Wellenleiter (30) aufweist, wobei die Schutzplatte (96) hermetisch gegen eine Oberseite der BEOL-Struktur (6) abgedichtet ist.

23. Verfahren nach Anspruch 22, wobei die Vorrichtung einen Hohlraum (98) aufweist, der sich zwischen der Schutzplatte (96) und dem plasmonischen Wellenleiter (30) befindet.

## Revendications

1. Un procédé de fabrication d'un dispositif plasmonique comprenant les étapes suivantes :
a) fabriquer une structure FEOL (4) comprenant une couche formant guide d'ondes (10), dans lequel la couche formant guide d'ondes (10) est structurée de manière à former au moins un guide d'ondes diélectrique (11),
b) fabriquer au moins une partie d9une structure BEOL (6) au-dessus de la structure FEOL (4) par dépôt et structuration de plusieurs couches métalliques horizontales (14, 16, 18) et de plusieurs couches diélectriques horizontales (19, 20, 22, 24) sur la structure FEOL (4),
c) après l9étape b), retirer, dans une zone cible (50), la structure BEOL (6) jusqu9à une distance ne dépassant pas 1 µm du guide d9ondes diélectrique (11),
d) après l9étape c), former, dans la zone cible (50), un guide d9ondes plasmonique (30) couplé au guide d9ondes diélectrique (11), le guide d9ondes plasmonique (30) présentant une première structure (32a, 32b, 32c) dont la permittivité présente une partie réelle négative et une deuxième structure (34) dont la permittivité présente une partie réelle positive.

2. Le procédé selon la revendication 1, dans lequel la première structure (32a, 32b, 32c) comprend une structure en argent métallique et/ou en or et/ou en cuivre, en particulier en argent et/ou en or.

3. Le procédé selon l9une quelconque des revendications précédentes, dans lequel la structure BEOL (6) et/ou la structure FEOL (4) ne comprennent pas d9argent métallique et/ou d9or.

4. Le procédé selon l9une quelconque des revendications précédentes, dans lequel, après l9étape b) et avant l9étape c), les couches métalliques structurées (14, 16, 18) de la structure BEOL (6) ne recouvrent pas plus de 20 % de la zone cible (50).

5. Le procédé selon l9une quelconque des revendications précédentes, dans lequel la première structure (32a, 32b, 32c) du guide d9ondes plasmonique (30) forme deux corps séparés par une fente (38), au moins une partie de la deuxième structure (34) étant disposée dans la fente (38).

6. Le procédé selon la revendication 5, dans lequel, après l9étape b) et avant l9étape c), les couches métalliques structurées (14, 16, 18) de la structure BEOL (6) ne recouvrent pas la fente (38).

7. Le procédé selon l9une quelconque des revendications précédentes, dans lequel la structure BEOL (4) et/ou la structure FEOL (4) comprend une couche d9arrêt de gravure (52), en particulier en polysilicium, en métal, en Al₂O₃ et/ou en Si₃N₄, s9étendant sur la zone cible (50), le procédé comprenant les étapes consistant à
dans l9étape c), de graver la structure BEOL (6) en utilisant la couche d9arrêt de gravure (52) pour arrêter la gravure et
ensuite, d9éliminer au moins une partie de la couche d9arrêt de gravure (52) dans la zone cible (50).

8. Le procédé selon la revendication 7, comprenant les étapes consistant, après avoir gravé la structure BEOL (6) en utilisant la couche d9arrêt de gravure (52) pour arrêter la gravure et avant d9éliminer au moins une partie de la couche d9arrêt de gravure (52),
à ajouter une couche protectrice (54) au-dessus de la couche d9arrêt de gravure (52), et
ensuite, à retirer à nouveau au moins une partie de la couche protectrice (54).

9. Le procédé selon l9une quelconque des revendications précédentes, comprenant l9étape consistant, après l9étape c) mais avant d9ajouter la première structure (32a, 32b, 32c) et la deuxième structure (34) du guide d9ondes plasmonique (30), à ajouter une couche d9espacement diélectrique (58) dans au moins une partie de la zone cible (50).

10. Le procédé selon l9une quelconque des revendications précédentes, comprenant en outre les étapes consistant à
exposer, lors de l9étape c), au moins une couche conductrice, en particulier au moins une couche métallique (14, 16, 18) ou une couche de polysilicium (52), de la structure BEOL (6) ou de la structure FEOL (4), en particulier au niveau d9un bord de la zone cible (50), et
mettre en contact électrique la première structure (32a, 32b, 32c) avec la couche conductrice exposée (14, 16, 18, 52) de la structure BEOL (6) ou de la structure FEOL (4),
et en particulier dans lequel la couche conductrice exposée est au moins l9une des deux couches métalliques les plus basses (14) de la structure BEOL (6).

11. Le procédé selon l9une quelconque des revendications précédentes, comprenant l9étape consistant à former, après l9étape c), au moins un conducteur métallique (60) s9étendant depuis la première structure (32a, 32b, 32c) au-delà d9un bord de la zone cible (50) jusqu9à une face supérieure de la structure BEOL (6).

12. Le procédé selon l9une quelconque des revendications précédentes, dans lequel la distance minimale entre le guide d9onde plasmonique (30) et le guide d9onde diélectrique (11) est inférieure à 1 µm.

13. Le procédé selon l9une quelconque des revendications précédentes, dans lequel le dispositif comprend au moins un élément choisi parmi le groupe constitué de sources de lumière à semi-conducteurs (64), de détecteurs de lumière à semi-conducteurs (82), des circuits électroniques de commande et/ou de traitement (66, 84), et des déphaseurs photoniques (68), en particulier des déphaseurs thermo-optiques ou à dispersion plasmatique, dans lequel l9élément est formé au moins en partie par la structure FEOL (4) et/ou la structure BEOL (6).

14. Le procédé selon l9une quelconque des revendications précédentes, dans lequel la deuxième structure (34) du guide d9onde plasmonique (30) comprend un matériau organique.

15. Le procédé selon la revendication 5, dans lequel le dispositif comprend au moins une couche diélectrique (56, 58) adjacente à et située sous la première structure (32a, 32b, 32c) du guide d'onde plasmonique (30), l'épaisseur (H) de la ou des couches diélectriques étant d'au moins 25 % d'une largeur (W) de la fente (38).

16. Le procédé selon l9une quelconque des revendications précédentes, dans lequel la première structure (32a, 32b, 32c) est connectée électriquement à une couche métallique (14) ou à une couche de polysilicium (52) de la structure BEOL (6) ou de la structure FEOL (4), et en particulier dans lequel la première structure (32a, 32b, 32c) est reliée électriquement à au moins l9une des deux couches métalliques (14) situées tout en bas de la structure BEOL (6).

17. Le procédé selon l9une quelconque des revendications précédentes, dans lequel le dispositif comprend une structure d9alimentation électriquement conductrice (90) adjacente horizontalement et/ou verticalement à la première structure (32a, 32b, 32c) et constituée d9un matériau différent de celui de la première structure (32a, 32b, 32c), et en particulier dans lequel la structure d9alimentation (90) est fabriquée après l9étape c).

18. Le procédé selon l9une quelconque des revendications précédentes, dans lequel le dispositif comprend
un modulateur interférométrique comportant un séparateur de faisceaux (36) et un combineur de faisceaux (38), avec deux chemins optiques (11a, 11b) disposés entre le séparateur de faisceaux (36) et le combineur de faisceaux (38),
deux guides d9ondes plasmoniques (30a, 30b) formant des modulateurs de phase électro-optiques dans les deux chemins optiques (11a, 11b), et
un déphaseur accordable (68) disposé entre le séparateur de faisceaux (36) et l9un des guides d9ondes plasmoniques (30a, 30b).

19. Le procédé selon l9une quelconque des revendications précédentes, dans lequel la couche formant guide d9ondes (10) est une couche semi-conductrice et dans lequel le guide d9onde diélectrique est un guide d9onde semi-conducteur.

20. Le procédé selon la revendication 19, dans lequel la couche formant guide d9ondes (10) est une couche semi-conductrice monocristalline.

21. Le procédé selon l9une quelconque des revendications précédentes, dans lequel la deuxième structure comprend un matériau électro-optique.

22. Le procédé selon l9une quelconque des revendications précédentes, dans lequel le dispositif comprend en outre une plaque de protection (96) située verticalement au-dessus du guide d9ondes plasmonique (30), la plaque de protection (96) étant scellée hermétiquement contre une face supérieure de la structure BEOL (6).

23. Le procédé selon la revendication 22, dans lequel le dispositif comprend une cavité (98) située entre la plaque de protection (96) et le guide d9onde plasmonique (30).
